(19) **Europäisches Patentamt / European Patent Office / Office européen des brevets**

(11) **EP 4 501 619 A1**

(12) **EUROPEAN PATENT APPLICATION**
published in accordance with Art. 153(4) EPC

(43) Date of publication:
**05.02.2025 Bulletin 2025/06**

(21) Application number: **23779987.9**

(22) Date of filing: **22.03.2023**

(51) International Patent Classification (IPC):
**B32B 7/08** $^{(2019.01)}$    **H01M 10/658** $^{(2014.01)}$
**H01M 50/204** $^{(2021.01)}$    **H01M 50/262** $^{(2021.01)}$

(52) Cooperative Patent Classification (CPC):
**A62C 3/16; B32B 5/08; B32B 5/16; B32B 7/08; B32B 9/00; B32B 9/04; B32B 17/02; B32B 17/06; B32B 25/04; B32B 25/10; B32B 33/00; H01M 10/658; H01M 50/204; H01M 50/262; Y02E 60/10**

(86) International application number:
**PCT/JP2023/011331**

(87) International publication number:
**WO 2023/189975 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.03.2022 JP 2022053783**

(71) Applicant: **IBIDEN CO., LTD.**
**Ogaki-shi, Gifu 503-8604 (JP)**

(72) Inventor: **YAMAGUCHI, Masataka**
**Ibi-gun, Gifu 501-0695 (JP)**

(74) Representative: **Hoffmann Eitle**
**Patent- und Rechtsanwälte PartmbB**
**Arabellastraße 30**
**81925 München (DE)**

(54) **FLAME-RETARDANT SHEET, MANUFACTURING METHOD THEREFOR, AND BATTERY PACK**

(57)    To provide a flameproof sheet that can further suppress propagation of heat between battery cells not only during normality but also during abnormality, has excellent resistance to external forces such as bending or twisting, and can be easily produced. A flameproof sheet (1) includes a flameproof material (10) and an elastic member (20) therewith, in which joining is made by using, for example, a resin staple (50) or a resin tag pin (60) such that a joint surface (40) of the flameproof material (10) with the elastic member (20) and a joint surface (40) of the elastic member (20) with the flameproof material (10) are movable along the joint surface (40). A battery pack (100) includes a plurality of battery cells (110), a battery case (120) configured to house the battery cells (110), and the flameproof sheet (1).

FIG.1

EP 4 501 619 A1

## Description

### TECHNICAL FIELD

The present invention relates to a flameproof sheet for use in, for example, a battery pack for power tools and vehicles, a production method therefor, and a battery pack to be housed in power tools and vehicles and to be used as a power source for electric motors or the like.

### BACKGROUND ART

Generally, power tools include those that are connected to a commercial power source and those that house therein a battery pack to be a power source for a driving electric motor. The power tools that house a battery pack therein are widely used from the viewpoint of having excellent operability.

A battery pack is one in which a plurality of battery cells are connected in series or in parallel, and for example, the battery cells are housed in a battery case made of a polycarbonate or the like to be integrated and housed in the power tool.

As the battery cell housed in the power tool, a lithium ion secondary battery, which has higher capacity and is capable of higher output than a lead-acid battery, a nickel-metal hydride battery, or the like, is mainly used. However, when thermal runaway occurs in one battery cell due to an internal short circuit, an overcharge, or the like in the battery (that is, in the case of "abnormality"), there is a risk that propagation of heat to other adjacent battery cells causes thermal runaway in other adjacent battery cells.

In addition, in recent years, from the viewpoint of environmental protection, an electric vehicle or a hybrid vehicle driven by an electric motor has been actively developed. The electric vehicle or the hybrid vehicle is equipped with a battery pack in which a plurality of battery cells are connected in series or in parallel to serve as a power source for a driving electric motor. In such battery cells to be used in vehicles, the lithium ion secondary battery, which has higher capacity and is capable of higher output, is also mainly used. Similar to the battery cells housed in the power tool described above, there is a risk that thermal runaway occurs in the battery cell.

As a countermeasure against the thermal runaway as described above, for example, Patent Literature 1 proposes a battery pack that can prevent and suppress the spread of fire to adjacent battery cells when abnormal heat generation occurs due to excessive current flowing into one battery cell. The battery pack described in Patent Literature 1 described above includes a plurality of battery cells and a block made of a metal material that retains the battery cells, and this block includes a plurality of small blocks. In addition, a size of a gap between the block and the battery cell is adjusted.

According to the battery pack in Patent Literature 1 configured in this way, the block that retains the battery cells is made of a metal material, so that heat can be quickly diffused.

In addition, Patent Literature 2 discloses a battery pack aimed at improving a heat dissipation property of secondary batteries and reducing performance deterioration. The battery pack described in Patent Literature 2 described above is one in which a plurality of secondary batteries are stored in a case, and a sheet-shaped rubber sheet that has a thermal conductivity equal to or more than a predetermined value and whose shape changes under a pressure is disposed between the plurality of secondary batteries and the case.

Patent Literature 2 described above discloses that since the rubber sheet has a relatively high thermal conductivity, heat from the secondary battery can be effectively dissipated through the case. In addition, the rubber sheet in the battery pack has elasticity and can thus be prevented from being damaged when dropped.

Further, a laminate of a heat insulation material and an elastic material is also known. For example, Patent Literature 3 describes a heat insulation material for batteries in which a heat insulation part and a buffer part such as an elastomer molded body are laminated and integrated to each other.

### CITATION LIST

### PATENT LITERATURE

Patent Literature 1: JP2014-96271A
Patent Literature 2: JP2004-146161A
Patent Literature 3: JP2021-140968A

SUMMARY OF INVENTION

TECHNICAL PROBLEM

When thermal runaway occurs in a battery cell, a gas is generated in the battery and the internal pressure increases, causing deformation of the battery cell. When this deformation is large, the case may be destroyed.

Such deformation of the battery cell occurs slightly even when the battery cell is assembled into a battery and subjected to charging and discharging cycles (that is, during "normal use"), and when the internal pressure of the battery cell repeatedly increases and decreases during charging and discharging, the battery cell is repeatedly pressed and relaxed by the case, which causes a decrease in battery performance.

In the battery pack according to Patent Literature 1 described above, the block that retains the battery cells is made of a metal material, so that heat can be quickly diffused. However, no consideration is given to destruction of the battery case and a decrease in battery performance due to deformation of the battery cell.

In addition, since the battery pack described in Patent Literature 1 described above requires a plurality of blocks and the gap between the blocks and the battery cells is changed, the blocks must be designed depending on an electronic device or a power tool in which the battery pack is to be mounted. Therefore, there is a problem that designing the block and assembling the battery pack are complicated.

Further, in the battery pack described in Patent Literature 2, no consideration is given, when thermal runaway occurs in a battery cell, to suppressing thermal runaway in other adjacent battery cells

Further, in the heat insulation material for batteries described in Patent Literature 3, the heat insulation part and the buffer part are joined to each other with an adhesive or a rivet. In the case of using an adhesive, the adhesive is required separately, and an adhesive layer coating step is also required. In addition, there is a risk that adhesive strength decreases due to insufficient coating with the adhesive or deterioration due to repeated charging and discharging. In addition, there is also a risk that the adhesive peels off when subjected to external forces such as bending or twisting.

On the other hand, in the case of using a rivet, the entire rivet is made of a metal, and there is a possibility that an electrical insulation property between the cells may be impaired. In addition, since the rivet has no flexibility, a joint surface of the heat insulation part with the buffer part and a joint surface of the buffer part with the heat insulation part are difficult to move along the joint surface, and it is difficult to follow external forces such as bending or twisting. Further, the heat insulation material for batteries is also difficult to move in a thickness direction, and effects of deformation and elasticity provided by the buffer part are not sufficiently exhibited.

The present invention has been made in view of the above problems, and an object thereof is to provide a flameproof sheet that can further suppress propagation of heat between battery cells not only during normality but also during abnormality, has excellent resistance to external forces such as bending or twisting, and can be easily produced.

SOLUTION TO PROBLEM

The above object of the present invention is achieved by the following configuration [1] relating to a flameproof sheet.

[1] A flameproof sheet, in which:

a flameproof material is laminated with an elastic member, and
joining is made such that a joint surface of the flameproof material with the elastic member and a joint surface of the elastic member with the flameproof material are movable along the joint surface.

In addition, preferred embodiments of the present invention relating to the flameproof sheet relate to the following [2] to [10].

[2] The flameproof sheet according to [1], in which the flameproof material and the elastic member are joined to each other with at least one joining member of a resin staple and a resin tag pin.

[3] The flameproof sheet according to [2], in which the joining member is provided such that a distribution density is higher in an outer peripheral portion than in a central portion of a surface of the flameproof sheet.

[4] The flameproof sheet according to any one of [1] to [3], in which the elastic member is made of a rubber or an elastomer.

[5] The flameproof sheet according to any one of [1] to [4], in which the flameproof material contains at least one kind of an inorganic particle, an organic fiber, and an inorganic fiber.

[6] The flameproof sheet according to [5], in which the inorganic particle is a particle composed of at least one kind of inorganic material selected from an oxide particle, a carbide particle, a nitride particle, and an inorganic hydrate particle.

[7] The flameproof sheet according to any one of [1] to [6], in which the flameproof material contains a first inorganic fiber and a second inorganic fiber different from each other in at least one property selected from an average fiber diameter, a shape, and a glass transition point.

[8] The flameproof sheet according to [7], in which

the average fiber diameter of the first inorganic fiber is larger than the average fiber diameter of the second inorganic fiber, and
the first inorganic fiber is linear or acicular, and the second inorganic fiber is dendritic or curly.

[9] The flameproof sheet according to [7], in which

the first inorganic fiber is an amorphous fiber,
the second inorganic fiber is at least one kind of fiber selected from a crystalline fiber and an amorphous fiber which has a glass transition point higher than the glass transition point of the first inorganic fiber, and
the average fiber diameter of the first inorganic fiber is larger than the average fiber diameter of the second inorganic fiber.

[10] The flameproof sheet according to [7], in which

the flameproof material contains an inorganic particle,
the inorganic particle includes at least one kind selected from a nanoparticle, a hollow particle, and a porous particle,
the first inorganic fiber is an amorphous fiber, and
the second inorganic fiber is at least one kind of inorganic fiber selected from a crystalline fiber and an amorphous fiber which has a glass transition point higher than the glass transition point of the first inorganic fiber.

In addition, the above object of the present invention is achieved by the following configuration [11] relating to a flameproof sheet production method.

[11] A method for producing the flameproof sheet according to any one of [1] to [10], including:
joining the flameproof material and the elastic member such that the joint surface of the flameproof material with the elastic member and the joint surface of the elastic member with the flameproof material are movable along the joint surface.

In addition, preferred embodiments of the present invention relating to the flameproof sheet production method relate to the following [12].

[12] The method for producing the flameproof sheet according to [11], in which the flameproof material and the elastic member are joined to each other by using at least one of a resin staple and a resin tag pin.

Further, the above object of the present invention is achieved by the following configuration [13] relating to a battery pack.

[13] A battery pack including:

a plurality of battery cells;
a battery case configured to house the battery cells; and
the flameproof sheet according to any one of [1] to [10].

ADVANTAGEOUS EFFECTS OF INVENTION

The flameproof sheet according to the present invention is obtained by laminating a flameproof material and an elastic member, and has improved adhesion between the flameproof material and battery cells due to the elastic member when provided between the battery cells. Therefore, the propagation of heat between the battery cells can be further suppressed not only during normality but also during abnormality.

In addition, the flameproof material and the elastic member are joined to each other with a resin staple or a resin tag pin without using an adhesive. The staple or tag pin is made of a resin and has flexibility, so that the flameproof material and the elastic member can move along the joint surface therebetween, and the flameproof sheet can easily be deformed in the thickness direction. Therefore, it can easily follow external forces such as bending or twisting, and an elastic force in the thickness direction due to the elastic member can also be maintained. Further, compared to the case of using an adhesive, only a stapler or a tacker needs to be used, and the can be produced easily.

Since the battery pack according to the present invention houses battery cells and the above flameproof sheet, the propagation of heat between the battery cells can be suppressed not only during normality but also during abnormality, and a chain reaction of thermal runaway can be prevented.

BRIEF DESCRIPTION OF DRAWINGS

[Fig. 1] Fig. 1 is a cross-sectional view showing a flameproof sheet (using a resin staple) according to Embodiment 1 of the present invention.

[Fig. 2] (A) to (D) in Fig. 2 are top views of the flameproof sheet shown in Fig. 1, and are diagrams showing examples of a distribution state of a resin staple.

[Fig. 3] Fig. 3 is a cross-sectional view showing a modification of Embodiment 1, similar to Fig. 1.

[Fig. 4] Fig. 4 is a cross-sectional view showing another modification of Embodiment 1, similar to Fig. 1.

[Fig. 5] Fig. 5 is a cross-sectional view showing a flameproof sheet (using a resin tag pin) according to Embodiment 2 of the present invention, similar to Fig. 1.

[Fig. 6] Fig. 6 is a cross-sectional view schematically showing a flameproof material containing two kinds of inorganic particles according to the present invention.

[Fig. 7] Fig. 7 is a cross-sectional view showing a battery pack according to an embodiment of the present invention. It is a perspective view showing an example of a shape.

DESCRIPTION OF EMBODIMENTS

The inventor of the present invention has made intensive studies in order to provide a flameproof sheet that can further suppress propagation of heat between battery cells not only during normality but also during abnormality and has excellent resistance to external forces such as bending or twisting.

As a result, the inventor of the present invention has found that when a flameproof material and an elastic member are laminated and are joined to each other with a resin staple or a resin tag pin instead of an adhesive or a rivet such that a joint surface of the flameproof material with the elastic member and a joint surface of the elastic member with the flameproof material are movable along the joint surface, the above problems can be solved.

Hereinafter, embodiments of the present invention will be described in detail with reference to the drawings. Note that the present invention is not limited to the embodiments described below, and can be freely changed and implemented without departing from the gist of the present invention.

First, a flameproof sheet according to an embodiment of the present invention will be described.

[Flameproof Sheet]

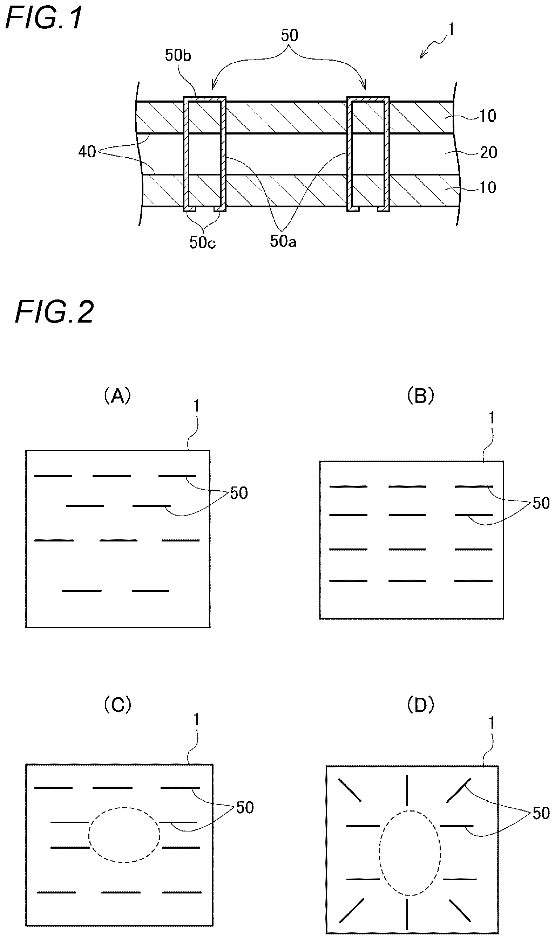

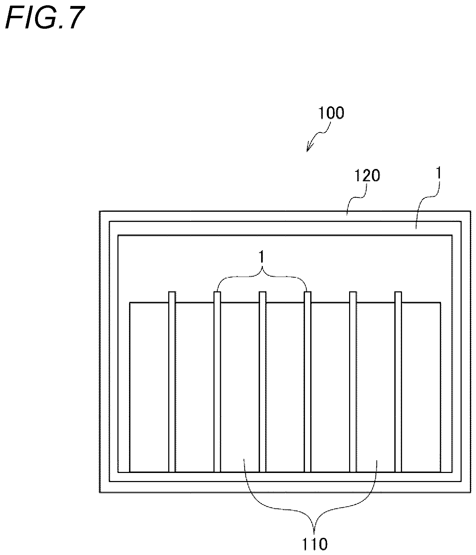

Fig. 1 is a cross-sectional view showing an example of a flameproof sheet according to the present embodiment. A flameproof sheet 1 is to be provided between, for example, battery cells 110, as shown in Fig. 7, which will be described later. Therefore, as shown in the figure, the flameproof sheet 1 preferably has a laminated structure in which an elastic member 20 is sandwiched between a pair of flameproof materials 10, 10, in order for the flameproof material 10 to come into contact with adjacent battery cells 110, 110 on both sides. When the flameproof sheet 1 is compressed in a thickness direction and inserted between the battery cells 110, 110, the elastic member 20 presses the flameproof materials 10, 10 on both surfaces outward in the thickness direction, thereby improving adhesion with the battery cells 110, 110.

The battery cell 110 is slightly deformed even in charge and discharge cycles during normal use. When expanding of the battery cell 110, the battery cell 110 receives a pressure from other adj acent battery cells 110, but since the elastic member 20 deforms and absorbs the deformation of the other adjacent battery cells 110, a decrease in battery performance is suppressed.

Even when thermal runaway occurs in one battery cell 110 during abnormality, the flameproof material 10 suppresses the propagation of heat to other adjacent battery cells 110. In order to suppress heat transfer, it is more effective for the flameproof material 10 of the flameproof sheet 1 to be in close contact with the battery cells 110 by using the elastic member 20. Further, since the deformation of the battery cell 110 is large during abnormality, the deformation can be absorbed by the elastic member 20 and the deformation of other adjacent battery cells 110 can be suppressed.

The flameproof sheet 1 according to the present embodiment has an effect of having the flameproof material 10 and the elastic member 20 as described above, and in the present embodiment, the two are joined to each other with a resin staple or a resin tag pin without using an adhesive.

Next, a flameproof sheet according to Embodiment 1 of the present invention will be described.

(Embodiment 1)

<Resin Staple>

Fig. 1 is a diagram showing a cross section of the flameproof sheet 1 according to Embodiment 1 when a resin staple 50 is used as a joining member.

The resin staple 50 has flexibility, and leg portions 50a thereof can be freely bent along a joint surface 40 between the flameproof material 10 and the elastic member 20, that is, in a left-right direction in the figure. Therefore, in a joint state therebetween, the flameproof material 10 and the elastic member 20 are slidably movable along the joint surface 40. Therefore, even when an external force such as bending or twisting is applied to the flameproof sheet 1, peeling off does not occur at the joint surface 40, unlike in the case of using an adhesive.

In addition, a rivet made of a metal is difficult to bend along the joint surface 40, so that it is also difficult to cope with bending or twisting, similar to the adhesive.

The leg portions 50a of the resin staple 50 can be curved and bent in the thickness direction of the flameproof sheet 1, that is, in an up-down direction in the figure. Therefore, compression in the thickness direction of the flameproof sheet 1 during insertion between the battery cells 110, 110, and further an elastic force in the thickness direction of the flameproof sheet 1 by the elastic member 20 after insertion can be maintained. In addition, a gap is formed between a crown portion 50b and a bent portion 50c of the resin staple 50 and the flameproof sheet 1 (in this case, the flameproof material 10), and both the crown portion 50b and the bent portion 50c are made of a resin and have flexibility, and can thus also relax a stress when the flameproof sheet 1 expands.

Note that, since the rivet made of a metal does not easily bend in the thickness direction of the flameproof sheet 1, such an effect cannot be obtained.

Further, since the resin staple 50 is made of an electrically insulating material, a sufficient electrical insulation property is ensured when it comes into contact with the battery cell 110.

Note that, the rivet is made of a metal and thus cannot provide such an electrical insulation effect.

The resin staples 50 are distributed over the entire surface of the flameproof sheet 1 at a predetermined interval. At this time, for example, when viewed from a top surface of the flameproof sheet 1, the resin staples 50 may be distributed in a staggered manner, that is, zigzag pattern in up and down direction, as shown in (A) in Fig. 2, or may be distributed symmetrically in up and down direction as shown in (B) in Fig. 2.

When the flameproof sheet 1 is provided between the battery cells 110, a high pressing force is applied to a central portion of the sheet, so that it is likely to shift along the joint surface 40 between the flameproof material 10 and the elastic member 20.

Therefore, as shown in (C) in Fig. 2 and (D) in Fig. 2, it is preferable that the resin staples 50 are provided such that a distribution density thereof is higher in an outer peripheral portion than in a central portion of the surface of the flameproof sheet 1 (circular portion indicated by a dotted line in the figure). At this time, it is also preferable to provide the resin staples 50 radially so as to surround the central portion of the surface of the flameproof sheet 1 (circular portion indicated by a dotted line in the figure).

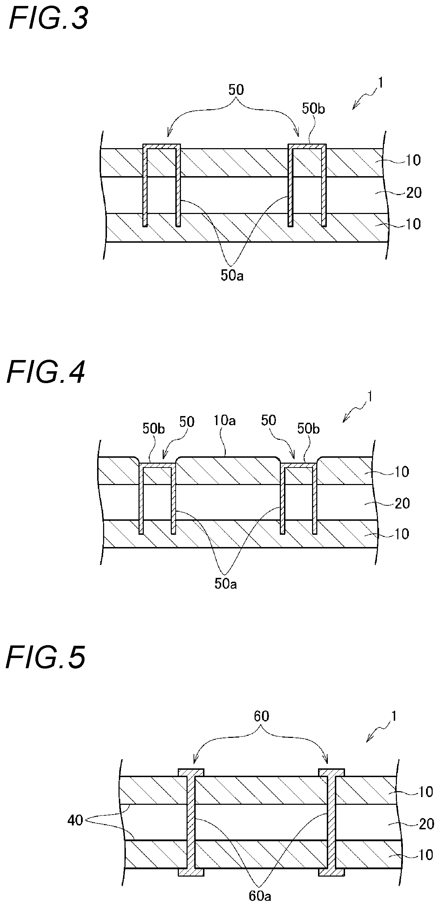

As shown in Fig. 3, the leg portions 50a of the resin staple 50 are inserted from one flameproof material 10 (upper side in the figure) and penetrated the elastic member 20, and then distal ends of the leg portions 50a can also be fixed at appropriate positions on another flameproof material 10 (lower side in the figure).

Accordingly, the joint state between the flameproof materials 10, 10 and the elastic member 20 is maintained, and as shown in Fig. 1, the bent portion 50c of the resin staple 50 is not exposed, and one entire surface of the flameproof sheet 1 is covered with only the flameproof material 10, so that the flameproof property as a whole is improved.

Further, as shown in Fig. 4, the crown portion 50b of the resin staple 50 may be buried in a surface 10a of the flameproof material 10.

Accordingly, the resin staple 50 does not come into contact with the battery cell 110, so that even when thermal runaway occurs in the battery cell 110, the resin staple 50 can be prevented from burning and disappearing.

Note that, the joining method using the resin staple 50 is not limited to the above method and can be modified in various ways. For example, in the above, the leg portions 50a of the resin staple 50 are inserted from one side (the upper side in the illustrated example) of the flameproof material 10. Alternatively, although not shown, the leg portions 50a can also be inserted alternately from the other side (lower side in the figure) of the flameproof material 10.

In this case, the crown portions 50b are alternately present on the surfaces of the upper and lower flameproof materials 10, 10, whereby joining strength is uniform over the entire sheet, and even when the resin staple 50 burns and disappears during thermal runaway, a chain reaction of thermal runaway to adjacent battery cells 110 can be effectively prevented.

Next, a flameproof sheet according to Embodiment 2 of the present invention will be described.

(Embodiment 2)

<Resin Tag Pin>

Fig. 5 is a cross-sectional view showing the flameproof sheet (using a resin tag pin) according to Embodiment 2 of the present invention, similar to Fig. 1. As shown in Fig. 5, instead of the resin staple 50, a resin tag pin 60 can also be used as joining means. The resin tag pin 60 is continuous with a single resin wire, and has a substantially "I" shape with both ends extending outward in two directions.

A leg portion 60a of the resin tag pin 60 can bend in the left-right direction in the figure along the joint surface 40 and further in the up-down direction in the figure along the thickness of the flameproof sheet 1, and the same effect as the resin staple 50 can be obtained.

As shown in (C) in Fig. 2 or (D) in Fig. 2, a distribution density of the resin tag pins 60 can also be made higher in the outer peripheral portion than in the central portion of the flameproof sheet 1.

Since only the resin staple 50 or the resin tag pin 60 is used for joining, there is no need for a coating step unlike with adhesives, and the flameproof sheet 1 can be easily produced.

Next, details of the flameproof material and the elastic member that constitute the flameproof sheet according to the present invention will be described.

<Flameproof Material and Elastic Member>

There are no restrictions on the flameproof material 10 and the elastic member 20, and preferred blending materials for each will be described below.

[Flameproof Material]

The flameproof material 10 preferably contains at least one of an organic fiber and an inorganic fiber, and more preferably contains an inorganic particle as necessary. In the present embodiment, these materials can be processed into a sheet, for example. Since it is important for the material constituting the flameproof material 10 to have a heat insulation property, it is selected from materials having a high heat insulation performance.

The thermal conductivity can be mentioned as an indicator indicating the heat insulation performance. In the present embodiment, the flameproof material 10 has a thermal conductivity of preferably less than 1 (W/m·K), more preferably less than 0.5 (W/m·K), and still more preferably less than 0.2 (W/m·K). Further, the thermal conductivity of the flameproof material 10 is even more preferably less than 0.1 (W/m·K), even still more preferably less than 0.05 (W/m·K), and particularly preferably less than 0.02 (W/m·K).

Note that the thermal conductivity can be measured in accordance with "Testing method for thermal conductivity of refractories" described in JIS R 2251.

(Inorganic Particle)

The inorganic particle is preferably composed of a heat-resistant compound, and a single kind of inorganic particle may be used, or two or more kinds of inorganic particles may be used in combination. When two or more kinds of inorganic particles having different heat transfer suppression effects are combined, a heating element can be cooled in multiple stages and a heat absorption effect can be exhibited in a wider temperature range. Therefore, the heat insulation performance can be improved. When two or more kinds of inorganic particles are contained, preferred kinds, shapes, and particle diameters of the inorganic particles will be described below.

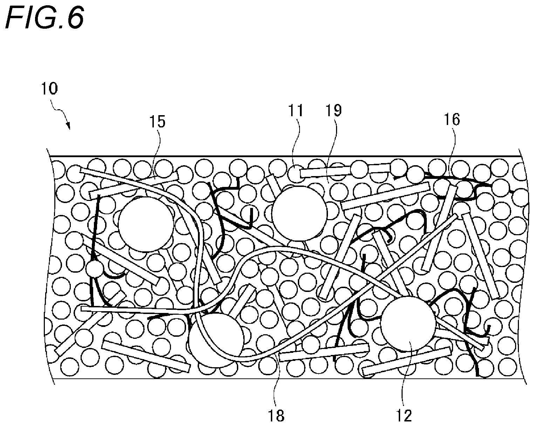

Fig. 6 is a cross-sectional view schematically showing the flameproof material 10 containing two kinds of inorganic particles according to the present invention. The shown flameproof material 10 contains, as an example, a first inorganic particle 11, a second inorganic particle 12, two kinds of inorganic fibers (a first inorganic fiber 15 and a second inorganic fiber 16), an organic fiber 18, and a binding material 19, which will be described later.

From the viewpoint of a heat transfer suppression effect, the first inorganic particle 11 and the second inorganic particle 12 are preferably a particle composed of at least one kind of inorganic material selected from an oxide particle, a carbide particle, a nitride particle, and an inorganic hydrate particle, and more preferably an oxide particle. In addition, a silica nanoparticle, a metal oxide particle, an inorganic balloon such as a microporous particle or a hollow silica particle, a particle composed of a thermally expandable inorganic material, a particle composed of a hydrous porous material, or the like can also be used. Hereinafter, the inorganic particle will be described in more detail, with a small-diameter inorganic particle as the first inorganic particle 11 and a large-diameter inorganic particle as the second inorganic particle 12.

(First Inorganic Particle)

(Oxide Particle)

An oxide particle has a high refractive index and has a high effect of diffusely reflecting light, so that when the oxide particle is used as the inorganic particle, radiant heat transfer can be suppressed, particularly in a high temperature range with abnormal heat generation or the like. Examples of the oxide particle include, but are not limited to, silica ($SiO_2$), titania ($TiO_2$), mullite ($Al_6O_{13}Si_2$), zirconia ($ZrO_2$), magnesia ($MgO$), zircon ($ZrSiO_4$), barium titanate ($BaTiO_3$), zinc oxide ($ZnO$), and alumina ($Al_2O_3$). That is, among the above oxide particle that can be used as the inorganic particle, only one kind or two or more kinds of oxide particles may be used. Particularly, silica is a component having a high heat insulation property, and titania is a component having a high refractive index compared to other metal oxides, and has a high effect of diffusely reflecting light and blocking radiant heat in a high temperature range of 500°C or higher Therefore, silica and titania are most preferably used as the oxide particle.

(Average primary particle diameter of oxide particle: 0.001 $\mu$m or more and 50 $\mu$m or less)

Since the particle diameter of the oxide particle may influence an effect of reflecting radiant heat, when an average primary particle diameter thereof is limited to a predetermined range, an even higher heat insulation property can be obtained.

That is, when the average primary particle diameter of the oxide particle is 0.001 $\mu$m or more, a wavelength thereof is sufficiently larger than a wavelength of light that contributes to heating, and it diffusely reflects the light efficiently. Therefore, in a high temperature range of 500°C or higher, the radiant heat transfer of heat within the flameproof material 4 can be suppressed, and the heat insulation property can be further improved.

On the other hand, when the average primary particle diameter of the oxide particle is 50 $\mu$m or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

Note that, in the present embodiment, the average primary particle diameter can be determined by observing particles with a microscope, comparing the particles with a standard scale, and taking an average of any 10 particles.

(Nanoparticle)

In the present embodiment, the nanoparticle refers to a nanometer-order particle having a spherical or nearly spherical shape and having an average primary particle diameter of less than 1 $\mu$m. The nanoparticle has a low density and thus suppresses the conductive heat transfer, and when the nanoparticle is used as the inorganic particle, voids are further finely dispersed, so that an excellent heat insulation property of suppressing the convective heat transfer can be obtained. Therefore, it is preferable to use a nanoparticle since it can suppress the conduction of heat between adjacent nanoparticles during normal use of a battery in a normal temperature range.

Further, when a nanoparticle having a small average primary particle diameter is used as the oxide particle, even when the flameproof material is compressed by expansion due to thermal runaway of the battery cell and the internal density in the flameproof material 10 increases, an increase in conductive heat transfer of the flameproof material 10 can be suppressed. This is thought to be because the nanoparticle tends to form fine voids between particles due to a repulsive force caused by static electricity, and the bulk density thereof is low, so that it is filled with the particle so as to provide a cushioning property.

Note that, in the present embodiment, when the nanoparticle is used as the inorganic particle, the kind thereof is not particularly limited as long as the above definition of nanoparticle is met. For example, since a silica nanoparticle is a material having a high heat insulation property and has a few contact points between particles, the amount of heat conducted by the silica nanoparticle is smaller than that in a case of using a silica particle having a large particle diameter. In addition, since a generally available silica nanoparticle has a bulk density of about 0.1 (g/cm³), for example, even when battery cells disposed adjacent to the flameproof material thermally expand and a large compressive stress is applied to the flameproof material, the size (area) or the number of contact points between the silica nanoparticles in a flame retardant does not increase remarkably, and the heat insulation property can be maintained. Therefore, it is preferable to use a silica nanoparticle as the nanoparticle. As the silica nanoparticle, wet silica, dry silica, aerogel, or the like can be used.

(Average primary particle diameter of nanoparticle: 1 nm or more and 100 nm or less)

When the average primary particle diameter of the nanoparticle is limited to a predetermined range, an even higher heat insulation property can be obtained.

That is, when the average primary particle diameter of the nanoparticle is 1 nm or more and 100 nm or less, the convective heat transfer and the conductive heat transfer of the heat within the flameproof material 10 can be suppressed particularly in a temperature range of lower than 500°C, and the heat insulation property can be further improved. In addition, even when a compressive stress is applied, voids remaining between the nanoparticles and contact points between many particles can suppress the conductive heat transfer, and the heat insulation property of the flameproof material 10 can be maintained.

Note that the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

(Inorganic Hydrate Particle)

The inorganic hydrate particle exhibits a so-called "heat absorption effect" that the inorganic hydrate particle receives heat from the heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide ($Al(OH)_3$), magnesium hydroxide ($Mg(OH)_2$), calcium hydroxide ($Ca(OH)_2$), zinc hydroxide ($Zn(OH)_2$), iron hydroxide ($Fe(OH)_2$), manganese hydroxide ($Mn(OH)_2$), zirconium hydroxide ($Zr(OH)_2$), and gallium hydroxide ($Ga(OH)_3$).

For example, aluminum hydroxide has about 35% crystal water, and as shown in the following formula, thermally decomposes to release the crystal water and exhibits a heat absorption effect. Then, after releasing the crystal water, aluminum hydroxide forms alumina ($Al_2O_3$), which is a porous material, and functions as a flameproof material.

$$2Al(OH)_3 \rightarrow Al_2O_3 + 3H_2O$$

Note that, as will be described later, the flameproof material 10 and the elastic member 20 according to the present embodiment are preferably interposed between, for example, battery cells, but in a battery cell that thermal runaway has experienced, the temperature rapidly rises to over 200°C and continues to rise to about 700°C. Therefore, it is also preferable that the inorganic particle is composed of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

(Average secondary particle diameter of inorganic hydrate particle: 0.01 $\mu$m or more and 200 $\mu$m or less)

In a case where the inorganic hydrate particle is used as the first inorganic particle 11, when the average particle diameter thereof is too large, it takes a certain amount of time for the first inorganic particle 11 (inorganic hydrate) near the center of the flameproof material 10 to reach the thermal decomposition temperature thereof, so that the first inorganic particle 11 near the center of the flameproof material 10 may not be completely thermally decomposed. Therefore, the average secondary particle diameter of the inorganic hydrate particle is preferably 0.01 $\mu$m or more and 200 $\mu$m or less, and more preferably 0.05 $\mu$m or more and 100 $\mu$m or less.

(Nitride Particle)

Preferred examples of the nitride particle include boron nitride (BN).

(Carbide Particle)

Preferred examples of the carbide particle include boron carbide ($B_4C$).

(Particle composed of Thermally Expandable Inorganic Material)

Examples of the thermally expandable inorganic material include vermiculite, bentonite, mica, and perlite.

(Particle composed of Hydrous Porous Material)

Specific examples of the hydrous porous material include zeolite, kaolinite, montmorillonite, acid clay, diatomaceous earth, wet silica, dry silica, aerogel, mica, and vermiculite.

(Inorganic Balloon)

As the inorganic particle, an inorganic balloon may be contained.

When an inorganic balloon is contained, the convective heat transfer or the conductive heat transfer of the heat within the flameproof material 10 can be suppressed in a temperature range of lower than 500°C, and the heat insulation property of the flameproof material 10 can be further improved.

As the inorganic balloon, at least one kind selected from a whitebait balloon, a silica balloon, a fly ash balloon, a barite balloon, and a glass balloon can be used.

(Content of inorganic balloon: 60 mass% or less with respect to total mass of flameproof material)

The content of the inorganic balloon is preferably 60 mass% or less with respect to the total mass of the flameproof material.

(Average particle diameter of inorganic balloon: 1 $\mu$m or more and 100 $\mu$m or less)

The average particle diameter of the inorganic balloon is preferably 1 $\mu$m or more and 100 $\mu$m or less.

(Second Inorganic Particle)

When two kinds of inorganic particles are contained, the second inorganic particle 12 is not particularly limited as long as it is different from the first inorganic particle 11 in material, particle diameter, or the like. As the second inorganic particle 12, an oxide particle, a carbide particle, a nitride particle, an inorganic hydrate particle, a silica nanoparticle, a metal oxide particle, an inorganic balloon such as a microporous particle or a hollow silica particle, a particle composed of a thermally expandable inorganic material, a particle composed of a hydrous porous material, or the like can be used. Details of these are as described above.

Note that, a nanoparticle has extremely low conductive heat transfer and can maintain an excellent heat insulation property even when a compressive stress is applied to the flameproof material. In addition, a metal oxide particle such as titania has a high effect of blocking radiant heat. Further, when a large-diameter inorganic particle and a small-diameter inorganic particle are used, the small-diameter inorganic particle enters gaps between the large-diameter inorganic particles, leading to a more dense structure, and the heat transfer suppression effect can be improved. Therefore, when the nanoparticle is used as the first inorganic particle 11, it is preferable that the flameproof material 10 further contains, as the second inorganic particle 12, a particle composed of a metal oxide having a diameter larger than that of the first inorganic particle 11.

Examples of the metal oxide include silicon oxide, titanium oxide, aluminum oxide, barium titanate, zinc oxide, zircon, and zirconium oxide. Particularly, titania is a component having a high refractive index compared to other metal oxides, and has a high effect of diffusely reflecting light and blocking radiant heat in a high temperature range of 500°C or higher Therefore, titania is most preferably used.

(Average primary particle diameter of second inorganic particle)

In the case where the second inorganic particle 12 composed of a metal oxide is contained in the flameproof material 10, when the average primary particle diameter of the second inorganic particle 12 is 1 $\mu$m or more and 50 $\mu$m or less, radiant heat transfer can be efficiently suppressed in a high temperature range of 500°C or higher The average primary particle diameter of the second inorganic particle 12 is more preferably 5 $\mu$m or more and 30 $\mu$m or less, and most preferably 10 $\mu$m or less.

(Contents of first inorganic particle and second inorganic particle)

In the case where the first inorganic particle 11 is a silica nanoparticle and the second inorganic particle 12 is a metal oxides, when the content of the first inorganic particle 11 is 60 mass% or more and 95 mass% or less with respect to the total mass of the first inorganic particle 11 and the second inorganic particle 12, the amount of the metal oxide particle needed to suppress the radiant heat transfer and the amount of the silica nanoparticle needed to suppress the conductive/convective heat transfer and provide the cushioning property can be optimized.

As a result, it is thought that a well-balanced and a high heat insulation property can be obtained in a wide temperature range from a temperature during normal use of a battery to a high temperature of 500°C or higher, even when a compressive force is applied from the outside.

(Inorganic Fiber)

Examples of the inorganic fiber include ceramic-based fibers such as a silica fiber, an alumina fiber, an alumina silicate fiber, a zirconia fiber, a carbon fiber, a soluble fiber, a refractory ceramic fiber, an aerogel composite, a magnesium silicate fiber, an alkaline earth silicate fiber, a potassium titanate fiber, and a potassium titanate whisker fiber, glass-based fibers such as a glass fiber and glass wool, rock wool, a basalt fiber, and natural mineral-based fibers such as wollastonite as mineral-based fibers other than those listed above.

These inorganic fibers are preferred in terms of heat resistance, strength, easy availability, and the like. Among the inorganic fibers, a silica-alumina fiber, an alumina fiber, a silica fiber, rock wool, an alkaline earth silicate fiber, and a glass fiber are particularly preferred from the viewpoint of handling properties.

The cross-sectional shape of the inorganic fiber is not particularly limited, and examples thereof include a circular cross-section, a flat cross-section, a hollow cross-section, a polygonal cross-section, and a core cross-section. Among them, an irregular cross-section fiber having a hollow cross-section, a flat cross-section, or a polygonal cross-section can be preferably used since the heat insulation property is slightly improved.

Unless the inorganic fiber has special properties to be described later, the lower limit of the average fiber length of the inorganic fiber is preferably 0.1 mm, and the lower limit is more preferably 0.5 mm. On the other hand, the upper limit of the average fiber length of the inorganic fiber is preferably 50 mm, and the upper limit is more preferably 10 mm. When the average fiber length of the inorganic fiber is less than 0.1 mm, the inorganic fibers are unlikely to be entangled with each other, and there is a risk that the mechanical strength of the flameproof material 10 decreases. On the other hand, when the average fiber length is more than 50 mm, a reinforcing effect can be obtained, but the inorganic fibers may not be able to entangle tightly with each other, or a single inorganic fiber may curl up, making continuous voids more likely to occur, and thus there is a risk that the heat insulation property decreases.

Unless the inorganic fiber has special properties to be described later, the lower limit of the average fiber diameter of the inorganic fiber is preferably 1 $\mu$m, the lower limit is more preferably 2 $\mu$m, and the lower limit is still more preferably 3 $\mu$m. On the other hand, the upper limit of the average fiber diameter of the inorganic fiber is preferably 15 $\mu$m, and the upper limit is more preferably 10 $\mu$m. When the average fiber diameter of the inorganic fiber is less than 1 $\mu$m, there is a risk that the mechanical strength of the inorganic fiber decreases. In addition, from the viewpoint of the influence on human health, the average fiber diameter of the inorganic fiber is preferably 3 $\mu$m or more. On the other hand, when the average fiber diameter of the inorganic fiber is larger than 15 $\mu$m, there is a risk that solid heat transfer using the inorganic fiber as a medium increases, resulting in a decrease in heat insulation property, and there is also a risk that the moldability and the strength of the flameproof material deteriorate.

Note that the inorganic fiber may be used alone or in combination in two or more kinds thereof. As shown in Fig. 6, the flameproof material 10 preferably contains, for example, the first inorganic fiber 15 and the second inorganic fiber 16 different from each other in at least one property selected from an average fiber diameter, a shape, and a glass transition point. When two kinds of inorganic fibers having different properties are contained, the mechanical strength and the retention property for the inorganic particle of the flameproof material 10 can be improved.

(Two Kinds of Inorganic Fibers Having Different Average Fiber Diameters and Fiber Shapes)

When two kinds of inorganic fibers are contained, it is preferable that the average fiber diameter of the first inorganic fiber 15 is larger than the average fiber diameter of the second inorganic fiber 16, the first inorganic fiber 15 is linear or acicular, and the second inorganic fiber 16 is dendritic or curly. The first inorganic fiber 15 having a large average fiber diameter (large diameter) has an effect of improving the mechanical strength and the shape retention property of the flameproof material 10. The above effect can be obtained by making one of the two kinds of inorganic fibers, for example, the first inorganic fiber 15, larger in diameter than that of the second inorganic fiber 16. Since external impacts may act on the flameproof material 10, the containing of the first inorganic fiber 15 in the flameproof material 10 improves impact resistance. External impacts include, for example, a pressing force due to expansion of the battery cells 110, or a wind pressure due to ignition of the battery cells 110.

In addition, in order to improve the mechanical strength and the shape retention property of the flameproof material 10, it is particularly preferable that the first inorganic fiber 15 is linear or acicular. Note that a linear or acicular fiber refers to a fiber having a degree of crimp, which will be described later, of, for example, less than 10%, and preferably 5% or less.

More specifically, in order to improve the mechanical strength and the shape retention property of the flameproof material 10, the average fiber diameter of the first inorganic fiber 15 is preferably 1 μm or more, and more preferably 3 μm or more. When the first inorganic fiber 15 is too thick, there is a risk that moldability and processability into the flameproof material 10 decrease. Therefore, the average fiber diameter of the first inorganic fiber 15 is preferably 20 μm or less, and more preferably 15 μm or less.

Note that the fiber length of the first inorganic fiber 15 is preferably 100 mm or less since when it is too long, there is a risk that the moldability and the processability decrease. Further, the fiber length of the first inorganic fiber 15 is preferably 0.1 mm or more since when it is too short, the shape retention property and the mechanical strength decrease.

On the other hand, the second inorganic fiber 16 having a small average fiber diameter (small diameter) has an effect of improving the retention property for other inorganic fibers and inorganic particles, and increasing the flexibility of the flameproof material 10. Therefore, it is preferable that the second inorganic fiber 16 has a diameter smaller than that of the first inorganic fiber 15.

More specifically, in order to improve the retention property for other inorganic fibers and inorganic particles, it is preferable that the second inorganic fiber 16 is easily deformable and has flexibility. Therefore, the average fiber diameter of the second inorganic fiber 16 having a small diameter is preferably less than 1 μm, and more preferably 0.1 μm or less. However, when the small-diameter inorganic fiber is too thin, the small-diameter inorganic fiber is easily broken, and the ability to retain other inorganic fibers and inorganic particles decreases. In addition, a large proportion of fibers remain entangled in the flameproof material 10 without retaining other inorganic fibers and inorganic particles, and in addition to a decrease in ability to retain other inorganic fibers and inorganic particles, the moldability and the shape retention property also become poor. Therefore, the average fiber diameter of the second inorganic fiber 16 is preferably 1 nm or more, and more preferably 10 nm or more.

Note that the fiber length of the second inorganic fiber 16 is preferably 0.1 mm or less since when the second inorganic fiber 16 is too long, the moldability and the shape retention property decrease. Further, the fiber length of the second inorganic fiber 16 is preferably 1 μm or more since when it is too short, the shape retention property and the mechanical strength decrease.

In addition, the second inorganic fiber 16 is preferably dendritic or curly. Having such a shape, the second inorganic fiber 16 is entangled with other inorganic fibers and inorganic particles in the flameproof material 10. Therefore, the ability to retain other inorganic fibers and inorganic particles is improved. In addition, in the case where the flameproof material 10 and the elastic member 5 receive a pressing force or a wind pressure, when the first inorganic fiber 15 is entangled with the second inorganic fiber 16, the flameproof material 10 is suppressed from slipping and moving, thereby improving the mechanical strength, particularly against an external pressing force or impact.

Note that dendritic refers to a two-dimensionally or three-dimensionally branched structure, for example, feather shape, tetrapod shape, radial, or three-dimensional mesh shape.

When the second inorganic fiber 16 is dendritic, the average fiber diameter can be obtained by measuring the diameters of a trunk and branches at several points using an SEM and calculating the average value thereof.

In addition, curly refers to a structure in which the fibers are bent in various directions. As one method of quantifying the curly form, it is known to calculate the degree of crimp from an electron micrograph, which can be calculated according to the following equation, for example.

$$\text{Degree of crimp (\%)} = (\text{fiber length - distance between fiber ends})/(\text{fiber length}) \times 100$$

Degree of crimp (%) = (fiber length - distance between fiber ends)/(fiber length) × 100

Here, both the fiber length and the distance between fiber ends are measured values on an electron micrograph. That is, the fiber length and the distance between fiber ends are values obtained by projection onto a two-dimensional plane, and are shorter than actual values. Based on this equation, the degree of crimp of the second inorganic fiber 16 is preferably 10% or more, and more preferably 30% or more. When the degree of crimp is small, the ability to retain other inorganic fibers and inorganic particles decreases, and entanglement (network) between the second inorganic fibers 16 and between the first inorganic fiber 15 and the second inorganic fiber 16 is difficult to form.

In the embodiment described above, as a method of improving the mechanical strength, the shape retention property, and the retention property for the inorganic particle and the inorganic fiber of the flameproof material 10, the first inorganic fiber 15 and the second inorganic fiber 16 having different average fiber diameters and fiber shapes are used. However, the mechanical strength, the shape retention property, and the particle retention property of the flameproof material 10 can also be improved by using the first inorganic fiber 15 and the second inorganic fiber 16 having different glass transition points or average fiber diameters.

As described above, in the present embodiment, in order to improve the mechanical strength, the shape retention property, and the particle retention property of the flameproof material 10, it is preferable to use various combinations of inorganic fibers. Hereinafter, a combination of the first inorganic fiber and the second inorganic fiber different from the embodiment shown in Fig. 6 will be described. In the present description, for convenience, other embodiments regarding inorganic fibers will be described using Fig. 6.

(Two Kinds of Inorganic Fibers Having Different Glass Transition Points)

When the flameproof material 10 contains two kinds of inorganic fibers, it is preferable that the first inorganic fiber 15 is an amorphous fiber, the second inorganic fiber 16 is at least one kind of fiber selected from a crystalline fiber and an amorphous fiber which has a glass transition point higher than that of the first inorganic fiber 15.

In addition, when the first inorganic particle 11 containing at least one kind selected from a nanoparticle, a hollow particle, and a porous particle is used together with the above two kinds of inorganic fibers, the heat insulation performance can be further improved.

The melting point of the crystalline inorganic fiber is usually higher than the glass transition point of the amorphous inorganic fiber. Therefore, when the first inorganic fiber 15 is exposed to a high temperature, the surface thereof softens before the second inorganic fiber 16 and binds other inorganic fibers and inorganic particles. Therefore, by containing the first inorganic fiber 15 as described above in the flameproof material 10, the mechanical strength of a heat insulation layer can be improved.

Specifically, as the first inorganic fiber 15, an inorganic fiber having a melting point of lower than 700°C is preferred, and many amorphous inorganic fibers can be used. Among them, a fiber containing $SiO_2$ is preferred, and a glass fiber is more preferred because of being inexpensive, easily available, and having excellent handling properties.

As described above, the second inorganic fiber 16 is at least one kind of fiber selected from a crystalline fiber and an amorphous fiber which has a glass transition point higher than that of the first inorganic fiber 15. As the second inorganic fiber 16, many crystalline inorganic fibers can be used.

When the second inorganic fiber 16 is composed of a crystalline fiber or one having a glass transition point higher than that of the first inorganic fiber 15, even when the first inorganic fiber 15 softens when exposed to a high temperature, the second inorganic fiber 16 does not melt or soften. Therefore, even during thermal runaway of battery cells, it can maintain the shape and continue to be present between the battery cells.

In addition, when the second inorganic fiber 16 does not melt or soften, minute spaces are maintained between particles, between the particle and the fiber, and between fibers contained in the flameproof material 10. Therefore, the heat insulation effect due to air can be exhibited and an excellent heat transfer suppression performance can be retained.

When the second inorganic fiber 16 is crystalline, as the second inorganic fiber 16, ceramic-based fibers such as a silica fiber, an alumina fiber, an alumina silicate fiber, a zirconia fiber, a carbon fiber, a soluble fiber, a refractory ceramic fiber, an aerogel composite, a magnesium silicate fiber, an alkaline earth silicate fiber, and a potassium titanate fiber, glass-based fibers such as a glass fiber and glass wool, rock wool, a basalt fiber, and natural mineral-based fibers such as wollastonite as mineral-based fibers other than those listed above can be used.

When the second inorganic fiber 16 is one having a melting point of higher than 1000°C among the fibers listed, even when thermal runaway occurs in the battery cell, the second inorganic fiber 16 does not melt or soften and can maintain the shape, and can thus be suitably used.

Note that, among the fibers listed as the above second inorganic fiber 16, for example, it is more preferable to use ceramic-based fibers such as a silica fiber, an alumina fiber, and an alumina silicate fiber, and a natural mineral-based fiber. Among them, it is still more preferable to use one having a melting point of higher than 1000°C.

In addition, even when the second inorganic fiber 16 is amorphous, any fiber having a glass transition point higher than that of the first inorganic fiber 15 can be used. For example, a glass fiber having a glass transition point higher than that of the first inorganic fiber 15 may be used as the second inorganic fiber 16.

Note that, as the second inorganic fiber 16, the various illustrated inorganic fibers may be used alone, or two or more kinds thereof may be used in combination.

Note that, as described above, the first inorganic fiber 15 has a glass transition point lower than that of the second inorganic fiber 16, and when exposed to a high temperature, the first inorganic fiber 15 softens first. Therefore, the first inorganic fiber 15 can bind other inorganic fibers and inorganic particles. However, for example, in the case where the second inorganic fiber 16 is amorphous and has a fiber diameter smaller than the fiber diameter of the first inorganic fiber 15, when the glass transition points of the first inorganic fiber 15 and the second inorganic fiber 16 are close to each other, there is a risk that the second inorganic fiber 16 softens first.

Therefore, when the second inorganic fiber 16 is an amorphous fiber, the glass transition point of the second inorganic fiber 16 is preferably 100°C or more, and more preferably 300°C or more, higher than the glass transition point of the first inorganic fiber 15.

Note that, the fiber length of the first inorganic fiber 15 is preferably 100 mm or less, and is preferably 0.1 mm or more. The fiber length of the second inorganic fiber 16 is preferably 0.1 mm or less. The reasons are as described above.

(Two Kinds of Inorganic Fibers Having Different Glass Transition Points and Average Fiber Diameters)

When the flameproof material 10 contains two kinds of inorganic fibers, it is preferable that the first inorganic fiber 15 is an amorphous fiber, the second inorganic fiber 16 is at least one kind of fiber selected from a crystalline fiber and an amorphous fiber which has a glass transition point higher than that of the first inorganic fiber 15, and the average fiber diameter of the first inorganic fiber 15 is larger than the average fiber diameter of the second inorganic fiber 16.

As described above, when the flameproof material 10 according to the present embodiment contains two kinds of inorganic fibers, it is preferable that the average fiber diameter of the first inorganic fiber 15 is larger than that of the second inorganic fiber 16.

In addition, it is preferable that the large-diameter first inorganic fiber 15 is an amorphous fiber, and the small-diameter second inorganic fiber 16 is at least one kind of fiber selected from a crystalline fiber and an amorphous fiber which has a glass transition point higher than that of the first inorganic fiber 15. Accordingly, the first inorganic fiber 15 has a low glass transition point and softens early, and thus becomes film-like and hardens as the temperature rises. On the other hand, when the small-diameter second inorganic fiber 16 is at least one kind of fiber selected from a crystalline fiber and an amorphous fiber which has a glass transition point higher than that of the first inorganic fiber 15, even when the temperature rises, the small-diameter second inorganic fiber 16 remains in the form of fiber. Therefore, the structure of the flameproof material 10 can be retained and powder falling can be prevented.

Note that even in this case, the fiber length of the first inorganic fiber 15 is preferably 100 mm or less, and is preferably 0.1 mm or more. The fiber length of the second inorganic fiber 16 is preferably 0.1 mm or less. The reasons are as described above.

The flameproof material 10 may contain different inorganic fibers in addition to the first inorganic fiber 15 and the second inorganic fiber 16 described above.

(Contents of First Inorganic Fiber and Second Inorganic Fiber)

When the flameproof material 10 contains two kinds of inorganic fibers, the content of the first inorganic fiber 15 is preferably 3 mass% or more and 30 mass% or less with respect to the total mass of the flameproof material 10, and the content of the second inorganic fiber 16 is preferably 3 mass% or more and 30 mass% or less with respect to the total mass of the flameproof material 10.

In addition, the content of the first inorganic fiber 15 is more preferably 5 mass% or more and 15 mass% or less with respect to the total mass of the flameproof material 10, and the content of the second inorganic fiber 16 is more preferably 5 mass% or more and 15 mass% or less with respect to the total mass of the flameproof material 10. With such contents, the shape retention property, pressing force resistance, and wind pressure resistance of the first inorganic fiber 15 and the ability to retain the inorganic particle of the second inorganic fiber 16 are exhibited in a well-balanced manner.

(Organic Fiber)

The organic fiber 18 is not particularly limited, and a synthetic fiber, a natural fiber, pulp, or the like can be used. As the synthetic fiber, a fiber composed of a thermosetting resin or a thermoplastic resin can be selected. For example, synthetic fibers composed of a modified polyethylene terephthalate (PET) fiber, a polyethylene (PE) fiber, a polypropylene fiber, a polyester fiber, a nylon fiber, a polybutylene terephthalate fiber, a polyvinyl alcohol (PVA) fiber, a polyurethane fiber, an ethylene-vinyl alcohol copolymer fiber, a polytrimethylene terephthalate fiber, a polyacetal fiber, a polytetrafluoroethylene fiber, a polyetheretherketone fiber, a polyphenylene sulfide fiber, a polyamide fiber, and a polyparaphenylphthalamide fiber can be used.

The kind and structure of the synthetic fibers that can be used in the present embodiment will be described in more detail below.

Vinylon: a fiber composed of a long-chain synthetic polymer containing 65 mass% or more of a vinyl alcohol unit.

Vinylal: a fiber composed of a long-chain synthetic polymer of polyvinyl alcohol with varying levels of acetalization.

Polyvinyl chloride, chlorofiber: a fiber composed of a long-chain synthetic polymer containing a vinyl chloride unit as a main component.

Polyvinylidene chloride, chlorofiber: a fiber composed of a long-chain synthetic polymer containing a vinylidene chloride unit (-CHz-CCl$_2$-) a main component.

Acrylic: a fiber composed of a long-chain synthetic polymer containing 85 mass% or more of an acrylonitrile group repeating unit.

Modacrylic: a fiber composed of a long-chain synthetic polymer containing 35 mass% or more and less than 85 mass% of an acrylonitrile group repeating unit.

Nylon, polyamide: a fiber composed of a long-chain synthetic polymer in which 85% or more of a repeating amide bond is bonded to an aliphatic or alicyclic unit.

Aramid: a fiber composed of a long-chain synthetic polymer in which an amide or imide bond directly bonded to two benzene rings is 85 mass% or more, and in the case of having an imide bond, the amount does not more than the amount of the amide bond.

Polyester: a fiber composed of a long-chain synthetic polymer containing 85 mass% or more of an ester unit of terephthalic acid and a dihydric alcohol.

Polyethylene terephthalate; PET: a fiber composed of a long-chain synthetic polymer containing 85 mass% or more of an ester unit of terephthalic acid and ethylene glycol.

Polytrimethylene terephthalate; PTT: a fiber composed of a long-chain synthetic polymer containing 85 mass% or more of an ester unit of terephthalic acid and 1,3-propanediol.

Polybutylene terephthalate; PBT: a fiber composed of a long-chain synthetic polymer containing 85 mass% or more of an ester unit of terephthalic acid and 1,4-butanediol.

Polyethylene; PE: a fiber composed of a long-chain synthetic polymer, which is a polymer composed of a saturated aliphatic hydrocarbon without substituents.

Polypropylene; PP: a fiber composed of a long-chain synthetic polymer without substituents, which is a polymer composed of a saturated aliphatic hydrocarbon with a methyl group side chain on every two carbon atoms, and has stereoregularity.

Elastane, polyurethane: a fiber composed of a long-chain synthetic polymer that contains 85 mass% or more of a polyurethane segment and that, when stretched to three times the length without tension, returns to the original length as soon as the tension is removed.

Polylactide: a fiber composed of a long-chain synthetic polymer containing 50 mass% or more of a lactic acid ester unit.

The preferred ranges of the average fiber length and the average fiber diameter of the organic fiber 18 are the same as those for the inorganic fiber.

(Other Materials)

In addition to the first inorganic particle 11, the second inorganic particle 12, the first inorganic fiber 15, the second inorganic fiber 16, and the organic fiber 18, the flameproof material 10 that can be used in the present embodiment may contain components necessary for molding into a flameproof material, such as a binding material or a coloring agent. Hereinafter, other components will also be described in detail.

(Binding Material)

The flameproof material 10 according to the present embodiment can be formed by sintering and the like even when the binding material 19 such as a binder is not contained. However, particularly when the flameproof material 10 contains a silica nanoparticle, it is preferable to add the binding material 19 in an appropriate content in order to retain the shape of the flameproof material 10.

In the present embodiment, the binding material 19 may be any binding material that binds the inorganic particle in order to retain the same, and the form thereof does not matter, such as a binder with adhesion, a fiber that physically entangles a particle, or a heat-resistant resin that adheres with an adhesive force. The first inorganic fiber 15 and the second inorganic fiber 16 also function as the binding material 19.

Note that as the binding material 19, an organic binder, an inorganic binder or the like can be used. In the present embodiment, the kinds are not particularly limited. As the organic binder, a polymer agglomerate, an acrylic emulsion, or the like can be used, and as the inorganic binder, silica sol, alumina sol, aluminum sulfate, or the like can be used. These function as the binding material 19 once the solvent such as water is to be removed.

In the flameproof material 10 for use in the present embodiment, the content of the binding material 19 is preferably 60 mass% or less, and more preferably 50 mass% or less, respect to the total mass of the flameproof material 10. In the flameproof material 10 for use in the present embodiment, the content of the binding material 19 is preferably 10 mass% or more, and more preferably 20 mass% or more, respect to the total mass of the flameproof material 10.

(Thickness of Flameproof Material)

The thickness of the flameproof material 10 for use in the present embodiment is not particularly limited, and is preferably in a range of 0.1 mm or more and 30 mm or less. When the thickness of the flameproof material 10 is within the above range, a sufficient heat insulation property and mechanical strength can be obtained and molding is easy.

[Elastic Member]

As the elastic member 20 according to the present embodiment, for example, a rubber or an elastomer can be used.

Next, a battery pack according to an embodiment of the present invention will be described.

[Battery Pack]

Fig. 7 is a cross-sectional view schematically showing a battery pack 100 according to an embodiment of the present invention.

The battery pack 100 includes a plurality of battery cells 110 housed in a battery case 120, and the flameproof sheet 1 can be disposed between adjacent battery cells 110 or in a space between the battery cell 110 and the battery case 120, such as a canopy, a side wall, or a bottom wall of the battery case 120.

Note that, the flameproof sheet 1 and the battery cell 110 may be in contact with each other or may have a gap therebetween. Even when there is no gap between the flameproof sheet 1 and the battery cell 110, since the flameproof sheet 1 includes the elastic member 20, when the temperature of any of the battery cells 110 rises and the volume expands, deformation of the battery cells 110 can be allowed.

The battery case 120 can be made of a polycarbonate, a PP, a PET, a polyamide (PA), aluminum, a stainless steel (SUS), or the like. In addition, the shape of the battery case 120 can be freely selected depending on the application location.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that the present application is based on a Japanese patent application (Japanese Patent Application No. 2022-053783) filed on March 29, 2022, and the contents thereof are incorporated herein by reference.

REFERENCE SIGNS LIST

    1 flameproof sheet
    10 flameproof material
    11 first inorganic particle
    12 second inorganic particle
    15 first inorganic fiber
    16 second inorganic fiber
    18 organic fiber
    19 binding material
    20 elastic member
    40 joint surface
    50 resin staple
    60 resin tag pin
    100 battery pack
    110 battery cell
    120 battery case

**Claims**

1.  A flameproof sheet wherein:

    a flameproof material is laminated with an elastic member, and
    joining is made such that a joint surface of the flameproof material with the elastic member and a joint surface of the elastic member with the flameproof material are movable along the joint surface.

2.  The flameproof sheet according to claim 1, wherein the flameproof material and the elastic member are joined to each other with at least one joining member of a resin staple and a resin tag pin.

3. The flameproof sheet according to claim 2, wherein the joining member is provided such that a distribution density is higher in an outer peripheral portion than in a central portion of a surface of the flameproof sheet.

4. The flameproof sheet according to any one of claims 1 to 3, wherein the elastic member is made of a rubber or an elastomer.

5. The flameproof sheet according to any one of claims 1 to 4, wherein the flameproof material contains at least one kind of an inorganic particle, an organic fiber, and an inorganic fiber.

6. The flameproof sheet according to claim 5, wherein the inorganic particle is a particle composed of at least one kind of inorganic material selected from an oxide particle, a carbide particle, a nitride particle, and an inorganic hydrate particle.

7. The flameproof sheet according to any one of claims 1 to 6, wherein the flameproof material contains a first inorganic fiber and a second inorganic fiber different from each other in at least one property selected from an average fiber diameter, a shape, and a glass transition point.

8. The flameproof sheet according to claim 7, wherein

   the average fiber diameter of the first inorganic fiber is larger than the average fiber diameter of the second inorganic fiber, and
   the first inorganic fiber is linear or acicular, and the second inorganic fiber is dendritic or curly.

9. The flameproof sheet according to claim 7, wherein

   the first inorganic fiber is an amorphous fiber,
   the second inorganic fiber is at least one kind of fiber selected from a crystalline fiber and an amorphous fiber which has a glass transition point higher than the glass transition point of the first inorganic fiber, and
   the average fiber diameter of the first inorganic fiber is larger than the average fiber diameter of the second inorganic fiber.

10. The flameproof sheet according to claim 7, wherein

    the flameproof material contains an inorganic particle,
    the inorganic particle includes at least one kind selected from a nanoparticle, a hollow particle, and a porous particle,
    the first inorganic fiber is an amorphous fiber, and
    the second inorganic fiber is at least one kind of inorganic fiber selected from a crystalline fiber and an amorphous fiber which has a glass transition point higher than the glass transition point of the first inorganic fiber.

11. A method for producing the flameproof sheet according to any one of claims 1 to 10, comprising:
    joining the flameproof material and the elastic member such that the joint surface of the flameproof material with the elastic member and the joint surface of the elastic member with the flameproof material are movable along the joint surface.

12. The method for producing the flameproof sheet according to claim 11, wherein the flameproof material and the elastic member are joined to each other with at least one of a resin staple and a resin tag pin.

13. A battery pack comprising:

    a plurality of battery cells;
    a battery case configured to house the battery cells; and
    the flameproof sheet according to any one of claims 1 to 10.

*FIG.1*

*FIG.2*

(A)

(B)

(C)

(D)

*FIG.3*

*FIG.4*

*FIG.5*

FIG.6

FIG.7

## INTERNATIONAL SEARCH REPORT

| International application No. |
|---|
| **PCT/JP2023/011331** |

**A. CLASSIFICATION OF SUBJECT MATTER**

***B32B 7/08***(2019.01)i; ***H01M 10/658***(2014.01)i; ***H01M 50/204***(2021.01)i; ***H01M 50/262***(2021.01)i
FI: B32B7/08; H01M50/204 401F; H01M50/262 E; H01M10/658; H01M50/262 S; H01M50/262 M

According to International Patent Classification (IPC) or to both national classification and IPC

**B. FIELDS SEARCHED**

Minimum documentation searched (classification system followed by classification symbols)

B32B, H01M

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-188383 A (MARUTAKA KOGYO INC) 13 December 2021 (2021-12-13) claims, paragraphs [0018], [0019], [0031], fig. 3 | 1-5, 11-12 |
| Y | | 6-10, 13 |
| Y | JP 2020-503464 A (3M INNOVATIVE PROPERTIES COMPANY) 30 January 2020 (2020-01-30) claims, paragraphs [0110] | 6-10 |
| Y | JP 2021-140968 A (NICHIAS CORP) 16 September 2021 (2021-09-16) claims | 13 |
| A | JP 2002-225189 A (TAMAGAWA SENI KOGYOSHO KK) 14 August 2002 (2002-08-14) entire text | 1-13 |
| A | JP 2018-53470 A (SHIMIZU CONSTRUCTION CO LTD) 05 April 2018 (2018-04-05) entire text | 1-13 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 June 2023** | **27 June 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

## INTERNATIONAL SEARCH REPORT
### Information on patent family members

International application No.

**PCT/JP2023/011331**

| Patent document cited in search report | | | Publication date (day/month/year) | Patent family member(s) | | | Publication date (day/month/year) |
|---|---|---|---|---|---|---|---|
| JP | 2021-188383 | A | 13 December 2021 | JP | 6820624 | B1 | |
| JP | 2020-503464 | A | 30 January 2020 | US | 2020/0071865 | A1 | |
| | | | | claims, paragraph [0121] | | | |
| | | | | WO | 2018/126085 | A1 | |
| | | | | EP | 3562979 | A | |
| | | | | CN | 110291233 | A | |
| JP | 2021-140968 | A | 16 September 2021 | WO | 2021/177205 | A1 | |
| | | | | EP | 4117088 | A1 | |
| | | | | claims | | | |
| | | | | CN | 115244765 | A | |
| | | | | KR | 10-2022-0145874 | A | |
| JP | 2002-225189 | A | 14 August 2002 | (Family: none) | | | |
| JP | 2018-53470 | A | 05 April 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014096271 A
- JP 2004146161 A
- JP 2021140968 A
- JP 2022053783 A